(19) Europäisches Patentamt / European Patent Office / Office européen des brevets

(11) **EP 3 233 253 B1**

(12) **FASCICULE DE BREVET EUROPEEN**

(45) Date de publication et mention
de la délivrance du brevet:
**12.07.2023 Bulletin 2023/28**

(21) Numéro de dépôt: **15823696.8**

(22) Date de dépôt: **18.12.2015**

(51) Classification Internationale des Brevets (IPC):
**B01D 63/06** *(2006.01)* **B01D 46/24** *(2006.01)*
**B01D 67/00** *(2006.01)* **B01D 71/02** *(2006.01)*
**C04B 38/00** *(2006.01)*

(52) Classification Coopérative des Brevets (CPC):
(C-Sets disponibles)
**B01D 71/02; B01D 63/066; B01D 67/0041;
B01D 67/0046; B01D 67/0083; C04B 38/0006;
C04B 38/0054** (Cont.)

(86) Numéro de dépôt international:
**PCT/FR2015/053664**

(87) Numéro de publication internationale:
**WO 2016/097662 (23.06.2016 Gazette 2016/25)**

(54) **FILTRES COMPRENANT DES MEMBRANES A BASE DE SIC APPAUVRI EN OXYGENE**

FILTER MIT SAUERSTOFFARMEN SIC-MEMBRANEN

FILTERS COMPRISING OXYGEN-DEPLETED SIC MEMBRANES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.12.2014 FR 1462780**

(43) Date de publication de la demande:
**25.10.2017 Bulletin 2017/43**

(73) Titulaires:
• **SAINT-GOBAIN CENTRE DE RECHERCHES
ET D'ETUDES EUROPEEN
92400 Courbevoie (FR)**
• **Centre National de la Recherche Scientifique
75794 Paris Cedex 16 (FR)**
• **Université Montpellier 2 Sciences et Techniques
34095 Montpellier Cedex 5 (FR)**
• **Ecole Nationale Supérieure de Chimie de
Montpellier
34296 Montpellier Cedex 5 (FR)**

(72) Inventeurs:
• **URFFER, Daniel
84450 Saint-Saturnin (FR)**
• **GUIZARD, Christian
34660 Cournonterral (FR)**

(74) Mandataire: **Saint-Gobain Recherche
Département Propriété Industrielle
39 Quai Lucien Lefranc
93300 Aubervilliers (FR)**

(56) Documents cités:
EP-A1- 0 219 383 EP-A1- 2 484 433
EP-A1- 2 511 250 WO-A1-2010/028330
CN-A- 104 174 298

(52) Classification Coopérative des Brevets (CPC):
(Cont.)

C-Sets
**C04B 38/0006, C04B 35/00, C04B 38/0096;**
**C04B 38/0054, C04B 35/565, C04B 38/0074**

**Description**

L'invention se rapporte au domaine des structures filtrantes en un matériau inorganique, destinées à la filtration des liquides, en particulier les structures revêtues d'une membrane afin de séparer des particules ou des molécules d'un liquide, plus particulièrement de l'eau.

On connaît depuis longtemps des filtres utilisant des membranes céramiques ou non céramiques pour réaliser la filtration de fluides variés, notamment d'eaux polluées. Ces filtres peuvent fonctionner selon le principe de la filtration frontale, cette technique impliquant le passage du fluide à traiter à travers un média filtrant, perpendiculairement à sa surface. Cette technique est limitée par l'accumulation de particules et la formation d'un gâteau à la surface du média filtrant. Cette technique est donc plus particulièrement adaptée à la filtration de liquides peu chargés en polluants (c'est-à-dire les particules liquides ou solides en suspension).

Selon une autre technique à laquelle se rapporte également la présente invention, on utilise la filtration tangentielle, qui, au contraire, permet de limiter l'accumulation de particules, grâce à la circulation longitudinale du fluide à la surface de la membrane. Les particules restent dans le flux de circulation alors que le liquide peut traverser la membrane sous l'effet de la pression. Cette technique assure une stabilité des performances et du niveau de filtration.

Les points forts de la filtration tangentielle sont donc sa facilité de mise en oeuvre, sa fiabilité grâce à l'utilisation des membranes organiques et/ou inorganiques dont la porosité est adaptée pour effectuer ladite filtration, et son fonctionnement en continu. La filtration tangentielle fait appel à peu ou pas d'adjuvant et fournit deux fluides séparés qui peuvent être tous deux valorisables : le concentrât (également appelé retentât) et le filtrat (également appelé perméat) ; elle est considérée comme un procédé propre qui respecte l'environnement. Les techniques de filtration tangentielle sont notamment utilisées pour la microfiltration ou l'ultrafiltration. La configuration tangentielle requiert le plus souvent l'utilisation d'au moins deux pompes, l'une de pressurisation (ou gavage) et l'autre de recirculation. La pompe de recirculation présente souvent l'inconvénient d'une consommation énergétique conséquente. La mise en oeuvre de dispositifs filtrants garantissant de forts débits du filtrat permettrait de limiter la consommation d'énergie.

La présente invention est donc adaptée tout aussi bien aux filtres tangentiels qu'aux filtres à filtration frontale.

On connaît ainsi de la technique actuelle de nombreuses structures de filtres fonctionnant suivant les principes de la filtration tangentielle ou de la filtration frontale. Elles comprennent ou sont constituées à partir de supports tubulaires ou parallélépipédiques en un matériau inorganique poreux formés de parois délimitant des canaux longitudinaux parallèles à l'axe desdits supports.

Dans le cas de filtres tangentiels le filtrat passe au travers des parois puis est évacué au niveau de la surface extérieure périphérique du support poreux. Ces filtres sont plus particulièrement adaptés pour filtrer des liquides fortement chargés en particules.

Dans le cas des filtres frontaux les canaux longitudinaux sont normalement bouchés à une extrémité, par exemple alternativement, de manière à former des canaux d'entrée et des canaux de sortie séparés par les parois des canaux, les canaux d'entrée et/ou de sortie étant revêtus de la membrane filtrante au travers duquel tout le liquide passe, les particules étant retenues par la membrane.

La surface desdits canaux est le plus souvent habituellement recouverte d'une membrane, de préférence en un matériau inorganique poreux, appelée membrane, couche membranaire ou couche séparatrice membranaire dans la présente description, dont la nature et la morphologie sont adaptées pour arrêter les molécules ou les particules dont la taille est proche ou supérieure au diamètre médian des pores de ladite membrane, lorsque le filtrat se répand dans la porosité du support poreux sous la pression du fluide traversant le filtre. La membrane est classiquement déposée sur la surface interne des canaux par un procédé d'enduction d'une barbotine du matériau inorganique poreux suivie d'un traitement thermique de consolidation, notamment un séchage et le plus souvent d'un frittage des membranes céramiques.

De nombreuses publications indiquent différentes configuration des canaux traversants qui visent à obtenir un filtre présentant les propriétés optimales pour l'application et en particulier un flux de perméat sortant le plus élevé et le plus homogène possible d'un canal à un autre dans le plan de section du filtre.

Les travaux menés par la société déposante ont montré, selon une autre approche complémentaire, qu'au sein de telles structures filtrantes, il était utile d'agir sur la composition chimique de la membrane séparatrice, pour améliorer encore les performances de filtration de la structure, voire la durée de vie du filtre. Un tel but est notamment atteint par l'amélioration de la résistance à l'abrasion du filtre selon l'invention, qui peut de ce fait fonctionner efficacement sur une durée de vie sensiblement plus importante.

De nombreux documents de l'art décrivent différentes compositions possibles pour la membrane céramique en matériau inorganique poreux, sans toutefois établir de relation causale entre la composition du matériau constituant la membrane et les performances du filtre. Selon une réalisation, la demande FR 2549736 propose d'augmenter le flux de liquide filtré en spécifiant la taille des particules formant la couche filtrante par rapport à celles formant le support. Les couches en alumine divulguées présentent cependant un flux considéré comme faible au regard de la présente invention.

D'autres publications, par exemple la demande de brevet EP0219383A1, mentionnent l'utilisation de carbure et de nitrure de silicium comme matériau constitutif de la membrane. Selon l'exemple 2 de cette publication, un corps filtrant dont la couche membranaire formée de particules de SiC est directement calcinée sous azote à une température de 1050°C. La résistance à l'abrasion de la membrane ainsi obtenue est apparue cependant trop faible pour permettre l'obtention de filtres ayant une durée de vie prolongée.

La demande de brevet WO03/024892 décrit une méthode de préparation d'un support ou d'une membrane réalisés à partir d'un mélange de particules grosses de SiC alpha, d'une poudre de silicium métallique et d'un précurseur de carbone destinés à former entre les gros grains une phase liante de fines particules de SiC béta. La phase liante est finalement convertie selon cet enseignement en alpha SiC ultérieurement par cuisson à très haute température (typiquement 1900 à 2300°C).

Le brevet US 7,699,903 B2 décrit des couches séparatrices membranaires en carbure de silicium à partir d'un mélange de deux poudres de particules de SiC alpha frittées ensemble à une température comprise entre 1750 et 1950°C.

Le document EP2511250 décrit un support poreux comprenant des grains de SiC dont la surface est recouverte par une couche contenant de l'azote. Cette couche d'azote est obtenue par un traitement de nitruration permettant de contrôler la résistivité pour la dépollution de gaz de combustion. Selon cette publication, on cherche à obtenir ainsi un filtre ou plus exactement un élément support en SiC dopé à l'azote dont la conductivité en fonction de la température est contrôlée. Il est clairement indiqué dans ce document que ladite nitruration est pratiquée sur les grains de SiC constituant le support poreux. Le document ne décrit donc le dépôt d'une couche supplémentaire (i.e. une couche séparatrice membranaire) sur la surface interne des canaux ou la surface externe de l'élément filtrant avant nitruration.

La demande de brevet EP2484433 décrit un filtre à particule pour la purification des gaz d'échappement dont les parois poreuses peuvent comprendre du SiC et d'autres particules que le SiC, ces particules pouvant être choisies parmi un oxyde, un oxynitrure ou un nitrure d'un élément des groupes 3 à 14 de la classification.

L'objet de la présente invention est de fournir un filtre incorporant une membrane filtrante résistante dont les performances de filtration sont sensiblement améliorées vis-à-vis de réalisations antérieures.

En particulier il a été mis en évidence par les travaux de la société déposante, décrits ci-après, qu'il était possible d'améliorer les performances de filtration, par une sélection et un traitement appropriés du matériau constitutif desdites membranes, ledit matériau pouvant être obtenu par le procédé selon l'invention.

Tout particulièrement, il a été mis en évidence par les travaux de la société déposante, décrits ci-après, un avantage non encore décrit dans l'art à limiter la teneur en oxygène du matériau constituant les couches membranaires comprises dans les filtres lorsque celui-ci est constitué essentiellement (ou constitué) de carbure de silicium SiC. Ce traitement a permis selon la présente invention d'obtenir des membranes (appelées aussi couches séparatrices membranaires dans la présente description) dont la capacité de filtration était sensiblement améliorée.

Dans la présente description on utilise indifféremment les termes membranes séparatrices, couche séparatrice ou couche séparatrice membranaire pour désigner de telles membranes permettant la filtration.

L'invention se rapporte ainsi selon un premier aspect à une structure filtrante ou filtre configuré pour la filtration d'un liquide, et défini dans la revendication 1. Ce filtre comprenant ou constitué par un élément support fait dans un matériau céramique poreux, ledit élément présentant une forme tubulaire ou parallélépipédique délimitée par une surface externe et comprenant dans sa portion interne un ensemble de canaux adjacents, d'axes parallèles entre eux et séparés les uns des autres par des parois dudit matériau inorganique poreux, dans lequel au moins une partie desdits canaux (et/ou au moins une partie de ladite surface externe selon certaines configurations de filtre) sont recouverts sur leur surface interne d'une couche séparatrice membranaire poreuse. Lors du fonctionnement du filtre, cette couche, comme indiqué précédemment, entre en contact avec ledit fluide à filtrer circulant dans lesdits canaux pour en permettre la filtration tangentielle ou frontale.

Dans un filtre selon la présente invention :

- ladite couche est faite dans un matériau constitué essentiellement de carbure de silicium (SiC), représente plus de 97% de la masse du matériau constituant la couche séparatrice membranaire
- la teneur massique en oxygène élémentaire de la couche est inférieure à 0,5%
- La porosité de la couche séparatrice membranaire est comprise entre 30 et 70% et le diamètre médian de pores est compris entre 10 nanomètres et 5 micromètres.

Selon certaines configurations préférées mais non limitatives de la structure filtrante selon l'invention :

- Le SiC représente plus de 99% de la masse du matériau constituant la couche séparatrice membranaire.
- La concentration atomique d'oxygène mesurée par XPS à la surface des grains de SiC est inférieure à 10%, sur la base de la quantité totale des éléments Si, C et O.
- Le rapport carbone /oxygène mesuré par XPS à la surface des grains de SiC est supérieur à 4.
- La porosité de la couche séparatrice membranaire est comprise entre 30 et 70% et le diamètre médian de pores est compris entre 100 et 1500 nm et de manière très préférée entre 200 et 1000 nm, tel que cela peut classiquement être mesuré par analyse de clichés obtenus par microscopie électronique à balayage (MEB).

- La taille médiane des grains de SiC dans ledit matériau est comprise entre 20 nanomètres et 10 micromètres, de préférence entre 0,1 et 1 micromètre.
- La teneur massique en oxygène élémentaire du matériau constituant la couche séparatrice membranaire est inférieure ou égale à 0,4% et de préférence est inférieure à 0,3%.
- Le filtre peut comprendre en outre une ou plusieurs couches primaires disposées entre le matériau constituant l'élément support et le matériau constituant la couche séparatrice membranaire.
- Le ratio $100 \times ([d90-d10]/d50)$ de diamètres de pores est inférieur à 10, de préférence inférieur à 5, les percentiles D10, D50 et D90 d'une population de pores étant les diamètres de pores correspondant respectivement aux pourcentages de 10%, 50%, 90% sur la courbe de distribution cumulée de distribution de tailles de pores classées par ordre croissant et mesurées par microscopie optique.
- Le SiC constituant les grains est essentiellement sous forme cristallographique alpha.

Notamment, la concentration atomique d'oxygène, mesurée par XPS à la surface des grains de SiC dans le couche séparatrice membranaire, est inférieure à 10%, sur la base de la quantité totale des éléments Si, C et O.

Enfin, l'invention se rapporte à un procédé de fabrication d'une couche séparatrice membranaire, dans un filtre tangentiel ou frontal, de préférence tangentiel, défini dans la revendication 11 et comprenant les étapes suivantes :

- préparation d'une barbotine à partir d'une poudre de particules de carbure de silicium de taille moyenne comprise entre 20 nanomètres et 10 micromètres,
- application de ladite barbotine sur l'élément support, dans des conditions permettant la formation d'une couche mince de la barbotine sur la partie interne des canaux dudit filtre,
- séchage, puis cuisson sous une atmosphère d'un gaz neutre à une température comprise entre 1400°C et 2000°C et pendant un temps suffisant pour l'obtention d'une couche séparatrice membranaire sur leur surface interne desdits canaux constituée essentiellement de grains de carbure de silicium frittés,
- traitement d'élimination d'une partie de l'oxygène résiduel élémentaire présent à la surface desdits grains, par l'action d'acide fluorhydrique.

En ce qui concerne le support poreux, on donne les indications suivantes concernant des modes de réalisation préférés mais non limitatifs de la présente invention :

- La porosité ouverte du matériau constituant l'élément support est inférieure à 70%, notamment comprise entre 20 et 60%.
- Le diamètre médian de pores du matériau constituant le support poreux est compris entre 5 et 50 micromètres, de manière plus préférée entre 10 et 40 micromètres.
- Le support poreux comprend et de préférence est constitué par un matériau céramique, de préférence un matériau céramique non oxyde, de préférence choisi parmi le carbure de Silicium SiC, en particulier le SiC fritté en phase liquide ou en phase solide, le SiC recristallisé, le nitrure de Silicium, en particulier $Si_3N_4$, l'oxynitrure de Silicium, en particulier $Si_2ON_2$, l'oxynitrure de Silicium et d'Aluminium, ou une combinaison de ceux-ci. De préférence le support est constitué de carbure de Silicium, de manière encore plus préférée de SiC recristallisé.

- La base de la forme tubulaire ou parallélépipédique est polygonale, de préférence carrée ou hexagonale, ou circulaire. La forme tubulaire ou parallélépipédique présente un axe central longitudinal de symétrie (A).
- Notamment dans le cas d'un filtre à filtration frontale, les canaux sont bouchés à une extrémité, de préférence alternativement, afin de définir des canaux d'entrée et des canaux de sortie de façon à forcer le liquide entrant par les canaux d'entrée à la surface desquels est déposée la membrane au travers de laquelle le liquide passe avant d'être évacué par les canaux de sortie.
- Si le filtre est tangentiel, l'extrémité du support tubulaire peut être en contact avec une plaque étanche au liquide à filtrer et perforée à l'endroit des canaux qui lui font face de manière à former un support filtrant placé dans une tubulure ou un système de filtration. Une autre possibilité peut consister à introduire le filtre tangentiel dans la tubulure un joint périphérique étanche à chaque extrémité et autour du filtre de manière à assurer le flux de perméat indépendamment du flux de concentrât.
- Les éléments sont de section hexagonale, la distance entre deux côtés opposés de la section hexagonale étant comprise entre 20 et 80 mm.
- Les conduits des éléments filtrants sont ouverts sur leurs deux extrémités.
- Les conduits des éléments filtrants sont alternativement bouchés sur la face d'introduction du liquide à filtrer et sur la face opposée.

- Les conduits des éléments filtrants sont ouvert sur la face d'introduction du liquide et fermés sur la face de récupération.
- Une majorité des conduits, notamment plus de 50%, voire plus de 80%, sont de section carrée, ronde ou oblongue, de préférence ronde, et de préférence encore ont un diamètre hydraulique compris entre 0,5mm et 10mm, de préférence entre 1mm et 5mm. Le diamètre hydraulique Dh d'un canal est calculé, dans un plan de section transversal P quelconque de la structure tubulaire, à partir de la surface de la section du canal S dudit canal et de son périmètre P, selon ledit plan de section et par application de l'expression classique suivante :

$$Dh = 4 \times S / P.$$

Comme indiqué précédemment, le filtre selon l'invention peut comprendre, outre la couche séparatrice membranaire, une ou plusieurs couches primaires, disposées entre le matériau constituant l'élément support et le matériau constituant la couche séparatrice membranaire. Le rôle de cette (ces) couche(s) dite(s) primaire(s) consiste à faciliter l'accrochage de la couche séparatrice et/ou à éviter que les particules de la membrane séparatrice passent à travers le support, notamment lors d'un dépôt par enduction.

On donne en outre les indications suivantes :
La porosité ouverte et le diamètre médian de pores du support poreux décrits dans la présente description sont déterminés de manière connue par porosimétrie au mercure.

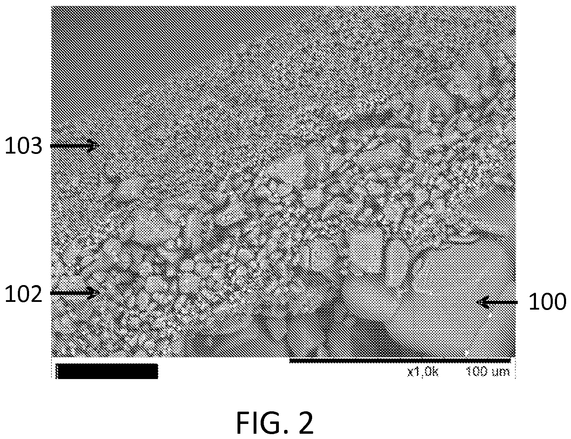

La porosité et le diamètre médian de pores de la couche séparatrice membranaire sont avantageusement déterminés selon l'invention à l'aide d'un microscope électronique à balayage. Par exemple, on réalise des sections d'une paroi du support en coupe transversale, comme illustré par la figure 2 ci-jointe, de manière à visualiser toute l'épaisseur du revêtement sur une longueur cumulée d'au moins 1,5 cm. L'acquisition des images est effectuée sur un échantillon d'au moins 50 grains. L'aire et le diamètre équivalent de chacun des pores sont obtenus à partir des clichés par des techniques classiques d'analyse d'images, éventuellement après une binarisation de l'image visant à en augmenter le contraste. On déduit ainsi une distribution de diamètres équivalents, dont on extrait le diamètre médian de pores. De même on peut déterminer par cette méthode une taille médiane des particules constituant la couche membranaire.

Un exemple de détermination du diamètre médian de pores ou de la taille médiane des particules constituant la couche membranaire, à titre d'illustration, comprend la succession des étapes suivantes, classique dans le domaine :

- Une série de clichés en MEB est prise du support avec sa couche membranaire observé selon une coupe transversale (c'est-à-dire dans toute l'épaisseur d'une paroi). Pour plus de netteté, les clichés sont effectués sur une section polie du matériau. L'acquisition de l'image est effectuée sur une longueur cumulée de la couche membranaire au moins égal à 1,5 cm, afin d'obtenir des valeurs représentatives de l'ensemble de l'échantillon.
- Les clichés sont de préférence soumis à des techniques de binarisation, bien connues dans les techniques de traitement de l'image, pour augmenter le contraste du contour des particules ou des pores.
- Pour chaque particule ou chaque pore constituant la couche membranaire, une mesure de son aire est réalisée. Un diamètre équivalent de pores ou de grain est déterminé(e), correspondant au diamètre d'un disque parfait de même aire que celui mesuré pour ladite particule ou pour ledit pore (cette opération pouvant éventuellement être réalisée à l'aide d'un logiciel dédié notamment Visilog® commercialisé par Noesis).
- une distribution de taille de particules ou de grains ou de diamètre de pores est ainsi obtenue selon une courbe classique de répartition et une taille médiane des particules et/ou un diamètre médian de pores constituant la couche membranaire sont ainsi déterminés, cette taille médiane ou ce diamètre médian correspondant respectivement au diamètre équivalent divisant ladite distribution en une première population ne comportant que des particules ou de pores de diamètre équivalent supérieur ou égal à cette taille médiane et une deuxième population comportant que des particules de diamètre équivalent inférieur à cette taille médiane ou ce diamètre médian.

Au sens de la présente description et sauf mention contraire, la taille médiane des particules ou le diamètre médian des pores mesurée par microscopie désigne respectivement le diamètre des particules ou de pores au-dessous duquel se trouve 50% en nombre de la population. En revanche s'agissant du diamètre de pores mesuré sur le substrat par porosimétrie mercure, le diamètre médian correspond à un seuil de 50% de la population en volume.

On appelle « frittage », de façon classique dans le domaine des céramiques (c'est-à-dire au sens indiqué dans la norme internationale ISO 836:2001, point 120), une consolidation par traitement thermique d'un aggloméré granulaire. Le traitement thermique des particules utilisées comme charge de départ pour l'obtention des couches membranaires selon l'invention permet ainsi la jonction et le développement de leurs interfaces de contact par mouvement des atomes à l'intérieur et entre lesdites particules.

Le diamètre médian $D_{50}$ des poudres de particules utilisées pour réaliser le support ou la membrane (la couche séparatrice membranaire) est donné classiquement par une caractérisation de distribution granulométrique, par exemple au moyen d'un granulomètre laser.

La teneur massique en oxygène élémentaire de la couche séparatrice membranaire peut être déterminée après fusion sous gaz inerte, par exemple au moyen d'un analyseur commercialisé sous la référence TC-436 par la société LECO Corporation.

La concentration atomique en oxygène à la surface des grains constituant la couche séparatrice membranaire est mesurée par spectrométrie photoélectronique X, ou spectrométrie de photoélectrons induits par rayons X ou XPS (en anglais, « X-Ray photoelectron spectrometry » également anciennement nommée ESCA en anglais « electron spectroscopy for chemical analysis »). L'échantillon est irradié par des rayons X monochromatiques qui provoquent l'ionisation de ses atomes par effet photoélectrique et une émission d'électrons dont l'énergie cinétique est caractéristique des éléments et donc de la composition chimique de la surface du matériau analysé sur une profondeur de 10 nanomètres environ. La profondeur d'analyse est limitée par le libre parcours moyen inélastique des électrons émis dans le matériau. L'intensité des raies du spectre de photoélectrons liée à la concentration atomique surfacique d'élément décroit exponentiellement avec la profondeur et on détermine selon l'invention une concentration relative entre éléments, c'est-à-dire pour une membrane de SiC selon l'invention une concentration élémentaire en oxygène par rapport aux autres éléments présents essentiellement Si et C.

La teneur en SiC globale de la membrane (la couche séparatrice membranaire) peut aussi être mesurée selon un protocole défini selon la norme ANSI B74.15-1992-(R2007) par différence entre carbone total et carbone libre, cette différence correspondant au carbone fixé sous forme de carbure de silicium.

Dans la présente description, sauf autrement spécifié, tous les pourcentages sont massiques.

On donne ci-après un exemple non limitatif permettant la réalisation d'un filtre selon l'invention, bien évidemment non limitatif également des procédés permettant d'obtenir un tel filtre et du procédé selon la présente invention:
Selon une première étape, le support filtrant est obtenu par extrusion d'une pâte au travers d'une filière configurée selon la géométrie de la structure à réaliser selon l'invention. L'extrusion est suivie d'un séchage et d'une cuisson afin de fritter le matériau inorganique constituant le support et obtenir les caractéristiques de porosité et de résistance mécanique nécessaire à l'application.

Par exemple, lorsqu'il s'agit d'un support en SiC, il peut être en particulier obtenu selon les étapes de fabrication suivantes :

- malaxage d'un mélange comportant des particules de carbure de silicium de pureté supérieure à 98% et présentant une granulométrie telle que 75% en masse des particules présente un diamètre supérieur à 30 micromètres, le diamètre médian en masse de cette fraction granulométrique (mesuré par granulomètre laser) étant inférieur à 300 micromètres. Le mélange comporte aussi un liant organique du type dérivé de cellulose. On ajoute de l'eau et on malaxe jusqu'à obtenir une pâte homogène dont la plasticité permet l'extrusion, la filière étant configurée pour l'obtention des monolithes selon l'invention.
- séchage des monolithes crus par micro-onde pendant un temps suffisant pour amener la teneur en eau non liée chimiquement à moins de 1% en masse.
- cuisson jusqu'à une température d'au moins 1300°C dans le cas de support filtrant à base de SiC fritté en phase liquide, de nitrure de Silicium, d'oxynitrure de Silicium, d'oxynitrure de Silicium et d'Aluminium ou même de BN et d'au moins 1900°C et inférieure à 2400°C dans le cas d'un support filtrant à base de SiC recristallisé ou fritté en phase solide. Dans le cas d'un support filtrant en nitrure ou oxynitrure l'atmosphère de cuisson est de préférence azotée. Dans le cas d'un support filtrant en SiC recristallisé l'atmosphère de cuisson est de préférence neutre et plus particulièrement d'argon. La température est maintenue typiquement pendant au moins 1 heure et de préférence pendant au moins 3 heures. Le matériau obtenu présente une porosité ouverte de 20 à 60% en volume et un diamètre médian de pores de l'ordre de 5 à 50 micromètres.

Le support filtrant est ensuite revêtu selon l'invention d'une membrane (ou couche séparatrice membranaire). Une ou plusieurs couches peuvent être déposées afin de former une membrane selon diverses techniques connues de l'homme du métier : techniques de dépôt à partir de suspensions ou de barbotines, techniques de dépôt chimique en phase vapeur (CVD) ou de projection thermique, par exemple projection plasma (plasma spraying).

De préférence les couches de membrane sont déposées par enduction à partir de barbotines ou de suspensions. Une première couche (appelée couche primaire) est préférentiellement déposée en contact avec le matériau poreux constituant le substrat, jouant le rôle de couche d'accrochage.

Un exemple non limitatif d'une formulation minérale de primaire comporte 30% à 50% en masse de poudre(s) de SiC de diamètre médian de 2 à 20 microns, le reste étant de l'eau déminéralisée, (hormis les éventuels additifs organiques).

Typiquement une formulation de primaire comprend en masse 25 à 35% d'une poudre de SiC de diamètre médian 7 à 20 microns, 15 à 25% d'une poudre de SiC de diamètre médian 2 à 6 microns, le complément à 100% étant apporté par l'eau déminéralisée (hormis les additifs ou ajouts organiques).

Bien que préférentiellement présente, dans certaines configurations de filtre, cette couche primaire peut être absente sans sortir du cadre de l'invention.

Une seconde couche de porosité plus fine est ensuite déposée sur la couche de primaire (ou directement sur le support), qui constitue la membrane ou couche séparatrice membranaire proprement dite. La porosité de cette dernière couche est adaptée selon les techniques de l'art, notamment par la température et la durée du traitement thermique de la couche décrit par la suite, pour conférer à l'élément filtrant ses propriétés finales de filtration, en particulier sa sélectivité par une valeur ajustée de son diamètre médian de pores. Un exemple non limitatif d'une formulation minérale de couche séparatrice comporte 30% à 50% en masse de poudre(s) de SiC de diamètre médian de 0,1 à 1 microns le reste étant de l'eau déminéralisée, (hormis les éventuels additifs organiques).

Afin de contrôler la rhéologie des barbotines et respecter une viscosité adéquate (typiquement comprise entre 0,01 à 1,5 Pa.s de préférence 0,1 à 0,8 Pa.s sous un gradient de cisaillement de $1s^{-1}$ mesurée à 22°C selon la norme DINC33-53019), des agents épaississants (selon des proportions typiquement entre 0,02 et 2% de la masse d'eau). Des agents liants (typiquement entre 0,5 et 20% de la masse de poudre de SiC), des agents dispersants (entre 0,01 et 1% de la masse de poudre de SiC) peuvent aussi être ajoutés. Les agents épaississants sont de préférence des dérivés cellulosiques, les agents liants de préférence des PVA ou des dérivés d'acrylique et les agents dispersants sont de préférence du type polymétacrylate d'ammonium.

Des ajouts organiques exprimés en poids de la barbotine, notamment du Dolapix A88 comme agent défloculant par exemple selon une proportion de 0,01 à 0,5% ; de la Tylose par exemple de type MH4000P comme épaississant selon une proportion de 0,01 à 1%, du PVA comme agent collant à raison de 0,1 à 2% exprimé en masse d'extrait sec; du monoéthylène glycol comme plastifiant et de l'éthanol à 95% volume comme réducteur de tension de surface, sont plus particulièrement appropriés.

Ces opérations d'enduction permettent typiquement d'obtenir une couche de primaire d'épaisseur d'environ 30 à 40 micromètres après séchage. Lors de la deuxième étape d'enduction une couche de membrane d'épaisseur par exemple d'environ 30-40 μm est obtenue après séchage, cette gamme d'épaisseur n'étant bien entendu en rien limitative.

Les étapes spécifiques d'un procédé selon l'invention pour le dépôt de la couche séparatrice membranaire selon l'invention sur le support, éventuellement au-dessus de la couche de primaire décrite précédemment, sont décrites ci-après :

Selon un premier mode de réalisation privilégié, une barbotine est préparée comme indiqué précédemment à partir d'une poudre ou de préférence plusieurs poudres de particules de carbure de silicium de différentes granulométries et en présence de la quantité d'eau permettant de préférence de respecter les conditions de rhéologie et de viscosité décrites précédemment, ainsi qu'en présence des agents organiques nécessaires de préférence de manière à obtenir une barbotine ayant un PH inférieur ou égal à 9.

La barbotine est ensuite appliquée sur l'élément support, dans des conditions et par des moyens adaptés pour permettre la formation d'une couche mince sur la partie interne des canaux dudit filtre, tels que notamment décrits précédemment.

Après application de cette couche, le support est d'abord séchée à température ambiante typiquement pendant au moins 10 minutes puis chauffée à 60°C pendant au moins 12 heures. Finalement, une couche séparatrice membranaire poreuse à la surface des canaux du support est obtenue par frittage dans un four, dans une atmosphère d'un gaz neutre tel que l'argon, à la pression atmosphérique (1 bar). La température de cuisson est typiquement d'au moins 1300°C, de préférence 1400°C, de préférence d'au moins 1500°C et est préférentiellement inférieure à 2000°C, de préférence encore inférieure à 1900°C, pendant un temps suffisant, notamment d'au moins une heure, pour obtenir les caractéristiques requises, notamment de porosimétrie, de la membrane. La température de frittage de la couche séparatrice membranaire est normalement inférieure à la température de frittage du support.

Selon l'invention, le filtre comprenant la couche membranaire filtrante est ensuite soumis à un traitement supplémentaire visant à modifier au moins l'état de surface des grains de SiC frittés la constituant, en éliminant une partie de l'oxygène résiduel élémentaire présent à la surface desdits grains.

Tout traitement connu de l'art permettant d'arriver à un tel résultat peut être utilisé dans le cadre de la présente invention. On peut citer notamment les traitements suivants :

- Le support filtrant revêtu de sa couche membranaire frittée est plongé dans un bain d'acide fluorhydrique. Un autre fluorure acide, par exemple l'hydrogéno-fluorure d'ammonium peut aussi convenir. Avec des concentrations de 10 à 15 % volumique de HF, il est possible de faire un traitement efficace dès 20 °C mais il est préférable de faire un traitement dans la gamme de température 60-90 °C. Il est aussi possible d'utiliser une base alcaline, telle que de la lithine, de la soude ou de la potasse en solution concentrée à au moins 25% en volume et au point d'ébullition de la base. Dans le cas d'attaque basique, le lavage est plus compliqué du fait des risques d'hydrolyse locale de la solution de silicate alcalin au sein de pores très fins. Avantageusement ce traitement pourrait être réalisé sur membrane avant mise en service ou après nettoyage ou décolmatage en service. En effet l'opération de la membrane par voie chimique peut être oxydant et un traitement chimique selon l'invention peut contribuer à réduire l'oxygène de la membrane.

Avant le traitement acide, le support filtrant revêtu de sa couche membranaire frittée peut être soumis au préalable à une étape d'oxydation légère sous air ou d'un gaz de combustion, entre 800 et 1400°C, pendant 2 h avant le lavage permet d'éliminer d'éventuels résidus de carbone présents à la surface des grains de la membrane après la recristallisation et avant le traitement chimique d'élimination de l'oxygène. Un tel traitement thermique permet par ailleurs d'homogénéiser la phase silicatée avant traitement.

- Le filtre support filtrant revêtu de sa couche membranaire frittée est placé dans un four à une température de cuisson typiquement d'au moins 1000°C, de préférence entre 1100 et 1400°C, sous une atmosphère réductrice comprenant de préférence de l'hydrogène gazeux (H$_2$). Le traitement thermique à ce palier est par exemple prolongé de 0,5 à 5h, de préférence 1h à 2h. Le traitement est par exemple effectué à la pression atmosphérique (1 bar) voire en dessous de la pression atmosphérique. L'atmosphère réductrice est de préférence à base d'hydrogène, notamment un mélange H$_2$/N$_2$ ou H$_2$/Argon comprenant de préférence au moins 5%, voire au moins 10% d'hydrogène en volume. Le traitement thermique peut par exemple consister en un ou plusieurs cycles comprenant une montée en température de 5°C/min jusqu'à la température de palier décrite précédemment, chauffage d'au moins 1 heure à ladite température de palier de 2h puis une redescente à l'ambiante avec une rampe de 5°C/min.

L'épaisseur de la couche séparatrice membranaire obtenue est de préférence comprise entre 10 et 60 micromètres. Les analyses de microscopie électronique et de fluorescence X montrent que le matériau ainsi obtenu est constitué essentiellement de grains de SiC alpha liés entre eux par une phase liante où se concentre le nitrure de silicium.

Si le filtre est configuré pour une application en filtration tangentielle, il peut être fixé sur une plaque perforée à l'endroit des ouvertures de canaux, de manière étanche, afin d'être installé dans une tubulure ou un système de filtration. Le traitement thermique employé pour fixer la plaque perforée au support filtre doit être effectué à une température inférieure à la température de décomposition de la membrane composite.

Si le filtre présente des canaux alternativement bouchés afin d'obtenir un filtre membrane fonctionnant selon les principes de la filtration frontale et si le bouchage est effectué postérieurement au dépôt de la membrane au moins pour une face du filtre, soit du côté des canaux d'entrée soit du côté de sortie, le bouchage peut être réalisé avec une barbotine de SiC, les bouchons étant frittés à une température inférieure à la température de décomposition de la membrane composite.

Les figures associées aux exemples qui suivent sont fournis afin d'illustrer l'invention et ses avantages, sans bien entendu que les modes de réalisations ainsi décrits puissent être considérés comme limitatifs de la présente invention.

Dans les figures ci-jointes :

- La figure 1 illustre une configuration classique d'un filtre tubulaire selon la technique actuelle, selon un plan de coupe transversal P.
- La figure 2 est un cliché de microscopie d'un filtre montrant la couche de séparation membranaire au sens de la présente invention.

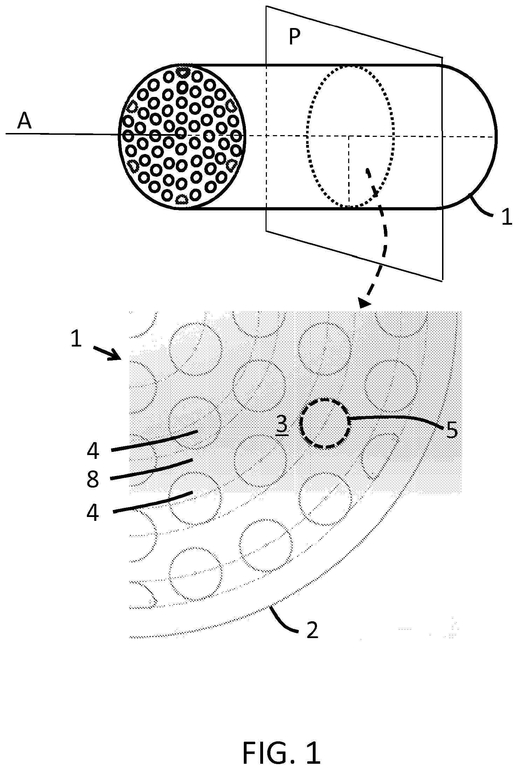

La figure 1 illustre un filtre tangentiel 1 selon la technique actuelle et conforme à la présente invention, tel qu'utilisé pour la filtration d'un fluide tel qu'un liquide. La figure 1 représente une vue schématique du plan de coupe transversal P. Le filtre comprend ou le plus souvent est constitué par un élément support 1 fait dans un matériau inorganique poreux de préférence non oxyde. L'élément présente classiquement une forme tubulaire d'axe central longitudinal A, délimitée par une surface externe 2. Il comprend dans sa portion interne 3 un ensemble de canaux 4 adjacents, d'axes parallèles entre eux et séparés les uns des autres par des parois 8. Les parois sont constituées dans un matériau inorganique poreux laissant passer le filtrat depuis la partie interne 3 vers la surface externe 2. Les canaux 4 sont recouverts sur leur surface interne d'une couche séparatrice membranaire 5 déposée sur un primaire d'accrochage, tel qu'illustré par le cliché de microscopie électronique reporté sur la figure 2. Cette couche séparatrice membranaire 5 (ou membrane) entre en contact avec ledit fluide circulant dans lesdits canaux et en permet la filtration.

Sur la figure 2 on a reporté un cliché de microscopie électronique pratiqué sur un canal 4 de la figure 1. On observe sur cette figure le support poreux 100 de forte porosité, la couche de primaire 102 permettant l'accrochage de la couche séparatrice membranaire 103 de plus fine porosité.

Selon une autre configuration non représentée d'un autre filtre selon l'invention, celui-ci est configuré pour que le fluide à traiter traverse initialement la paroi externe, le perméat étant recueilli cette fois en sortie des canaux. Selon une telle configuration, la couche membranaire filtrante est avantageusement déposée sur la surface externe du filtre et en recouvre au moins une partie.

Les exemples qui suivent sont fournis à titre uniquement illustratifs. Ils ne sont pas limitatifs et permettent de mieux comprendre les avantages techniques liés à la mise en oeuvre de la présente invention :

Les supports selon tous les exemples sont identiques et sont obtenus selon le même protocole expérimental qui suit :

On mélange dans un malaxeur :

- 3000 g d'un mélange des deux poudres de particules de carbure de silicium de pureté supérieure à 98% dans les proportions suivantes : 75% en masse d'une première poudre de particules présentant un diamètre médian de l'ordre de 60 micromètres et 25% en masse d'une deuxième poudre de particules présentant un diamètre médian de l'ordre de 2 micromètres. (Au sens de la présente description, le diamètre médian $d_{50}$ désigne le diamètre des particules au-dessous duquel se trouve 50% en masse de la population desdites particules).
- 300 g d'un liant organique du type dérivé de cellulose.

On ajoute de l'eau environ 20% en masse par rapport à la masse totale de SiC et d'additif organique et on malaxe jusqu'à obtenir une pâte homogène dont la plasticité permet l'extrusion d'une structure de forme tubulaire, la filière étant configurée pour l'obtention de blocs monolithes dont les canaux et les parois externes présentent une structure selon la configuration recherchée et telle que représentée sur les figures 1 à 2 ci-jointes. On synthétise ainsi pour chaque configuration 5 à 10 supports crus de 25 mm de diamètre et 30 cm de longueur.

Plus précisément, les monolithes cuits présentent des canaux ronds de diamètre hydraulique 2mm, les canaux périphériques en demi-lune représentés sur les figures présentant un diamètre hydraulique de 1,25mm. L'épaisseur moyenne de la paroi externe est 1,1 mm et l'OFA (Open Front Area) de la face d'entrée du filtre est de 37%. L'OFA (« open front area » en anglais) ou surface de front ouverte, est obtenue en calculant le rapport en pourcentage de l'aire couverte par la somme des sections transversales des canaux sur l'aire totale de la section transversale correspondante du support poreux.

Les monolithes crus ainsi obtenus sont séchés par micro-onde pendant un temps suffisant pour amener la teneur en eau non liée chimiquement à moins de 1% en masse.

Les monolithes sont ensuite cuits jusqu'à une température d'au moins 2100°C qui est maintenue pendant 5 heures. Le matériau obtenu présente une porosité ouverte de 43% et un diamètre moyen de distribution de pores de l'ordre de 25 micromètres, tel que mesuré par porosimétrie mercure.

### Exemple 1 (comparatif):

Selon cet exemple, une couche séparatrice membranaire en carbure de silicium est ensuite déposée sur la paroi interne des canaux d'une structure support telle qu'obtenue précédemment, selon le procédé décrit ci-après:
Un primaire d'accrochage de la couche séparatrice est constitué dans un premier temps, à partir d'une barbotine dont la formulation minérale comporte 30% en masse d'une poudre de grains de SiC noir (SIKA DPF-C) dont le diamètre médian D50 est d'environ 11 micromètres, 20% en masse d'une poudre de grains de SiC noir (SIKA FCP-07) dont le diamètre médian D50 est d'environ 2,5 micromètres, et 50% d'eau désionisée.

Une barbotine du matériau constituant la couche de filtration membranaire est également préparée, dont la formulation comporte 50% en masse de grains de SiC ($d_{50}$ autour de 0,6 micromètre) et 50% d'eau déminéralisée.

La rhéologie des barbotines a été réglée par ajout des additifs organiques à 0,5-0,7 Pa.s sous un gradient de cisaillement de $1s^{-1}$, mesurée à 22°C selon la norme DINC33-53019.

Ces deux couches sont déposées successivement selon le même procédé décrit ci-après : la barbotine est introduite dans un réservoir sous agitation (20 tour/min). Après une phase de désaérage sous vide léger (typiquement 25 millibars) tout en conservant l'agitation, le réservoir est mis en surpression d'environ 0,7 bar afin de pouvoir enduire l'intérieur du support à partir de sa partie basse jusqu'à son extrémité supérieure. Cette opération ne prend que quelques secondes pour un support de 30 cm de longueur. Immédiatement après enduction de la barbotine sur la paroi interne des canaux du support, l'excès est évacué par gravité.

Les supports sont ensuite séchés à température ambiante pendant 10 minutes puis à 60°C pendant 12h. Les supports ainsi séchés sont ensuite cuits sous Argon à une température de 1400°C pendant 2h à la pression ambiante.

Une coupe transversale est réalisée sur les filtres ainsi obtenus. La structure de la membrane est observée et étudiée au microscope électronique à balayage.

### Exemple 2 (selon l'invention):

Selon cet exemple, on procède de façon identique à l'exemple 1 mais le filtre obtenu est soumis à un traitement supplémentaire par immersion dans une solution concentrée d'acide fluorhydrique (20% volume), suivi de rinçages successifs pour ramener son pH à 6.

### Exemple 3 (comparatif):

Selon cet exemple, on procède de façon identique à l'exemple 1 mais le filtre obtenu est additionnellement soumis à un traitement d'oxydation sous vapeur d'eau à 350°C pendant 8 heures.

Les propriétés et les caractéristiques des filtres ainsi obtenus sont mesurées comme suit :

Sur la base des clichés de microscopie électronique, on mesure par analyse d'image l'épaisseur moyenne des couches successives obtenues pour chaque exemple.

L'épaisseur moyenne de la couche séparatrice est de l'ordre de 45 micromètres pour tous les exemples. Le diamètre médian de pores de la couche séparatrice membranaire est d'environ 250 nm pour tous les exemples.

Les autres résultats tels que mesurés comme indiqué précédemment sont reportés dans le tableau 1 qui suit.

On donne ci-après les détails de la mesure de flux (débit d'eau relatif) réalisée:

A une température de 25°C un fluide constitué d'eau déminéralisée alimente les filtres à évaluer sous une pression transmembranaire de 0,5 bars et une vitesse de circulation dans les canaux de 2 m/s. Le perméat (l'eau) est récupéré à la périphérie du filtre. La mesure du débit caractéristique du filtre est exprimée en L/min par surface de filtration après 20h de filtration. Dans le tableau les résultats de débit ont été exprimés par référence aux données enregistrées pour l'exemple 1 comparatif. Plus précisément, une valeur supérieure à 100% indique un débit augmenté par rapport à la référence (exemple 1) et donc une amélioration de la capacité de filtration.

Les caractéristiques et les propriétés des filtres obtenus selon les exemples 1 à 3 sont données dans le tableau 1 ci-après.

Tableau 1

| | Exemple 1 de référence | t égale 2 selon l'invention | Exemple 3 comparatif |
|---|---|---|---|
| Traitement additionnel | aucun | Immersion HF | Oxydation vapeur d'eau |
| Teneur massique en SiC de la membrane (%) * | 99,0 | 99,3 | 98,8 |
| Teneur massique en oxygène élémentaire de la membrane (%)** | 0,50 | 0,24 | 0,81 |
| Pourcentage atomique en surface de membrane *** <br> Si <br> C <br> O | 40,5 <br> 44,2 <br> 15,3 | 42,2 <br> 49,0 <br> 8,8 | 42,2 <br> 37,6 <br> 20,2 |
| Ratio C/O*** | 2,9 | 5,6 | 1,9 |
| Epaisseur moyenne de la membrane (micromètres) | 45 | 45 | 45 |
| Diamètre médian de pores de la membrane (nanomètres) | 250 | 250 | 250 |
| Mesure relative de flux | 100 | 138 | 61 |
| * Mesuré selon norme ANSI B74.15-1992- (R2007) <br> ** Mesuré par LECO <br> *** Mesuré par XPS | | | |

Les résultats regroupés dans le tableau 1 qui précèdent indiquent que l'exemple 2 selon l'invention présente une capacité de filtration très supérieure à celle du filtre de référence (exemple 1).

L'analyse des données reportées dans le tableau qui précède permet de corréler directement cette capacité supérieure avec le taux d'oxygène résiduel dans la couche membranaire.

Au final, les résultats regroupés dans le tableau indiquent également que le matériau utilisé selon l'invention pour fabriquer la couche séparatrice membranaire (membrane dans le tableau 1) ne peut être obtenu que suivant certaines conditions de procédé non encore décrites dans l'art antérieur, visant à limiter très fortement le taux d'oxygène présent dans celle-ci et plus particulièrement en surface des grains de SiC constituant la membrane.

**Revendications**

1. Filtre pour la filtration d'un liquide, comprenant ou constitué par un élément support (1) fait dans un matériau céramique poreux, ledit élément présentant une forme tubulaire ou parallélépipédique délimitée par une surface externe (2) et comprenant dans sa portion interne (3) un ensemble de canaux (4) adjacents, d'axes parallèles entre eux et séparés les uns des autres par des parois (8) dudit matériau inorganique poreux, dans lequel :

   - au moins une partie desdits canaux (4) sont recouverts sur leur surface interne d'une couche séparatrice membranaire (5) poreuse et/ou
   - au moins une partie de ladite surface externe (2) est recouverte d'une couche séparatrice membranaire (5) poreuse ;

   ledit filtre étant **caractérisé en ce que** :

   - ladite couche est faite dans un matériau constitué essentiellement de grains frittés de carbure de silicium (SiC), le SiC représentant plus de 97% de la masse du matériau constituant ladite couche, - la teneur massique en oxygène élémentaire de la couche séparatrice membranaire, déterminée par fusion sous gaz inerte, est inférieure à 0,5%,
   - la porosité et le diamètre médian de pores de la couche séparatrice membranaire, mesurés par analyse de clichés obtenus par microscope électronique à balayage, sont respectivement compris entre 30 et 70% et entre 10 nanomètres et 5 micromètres.

2. Filtre selon la revendication précédente, dans lequel le SiC représente plus de 99% de la masse du matériau constituant la couche séparatrice membranaire.

3. Filtre selon l'une des revendications précédentes, dans lequel la concentration atomique d'oxygène mesurée par XPS à la surface des grains de SiC est inférieure à 10%, sur la base de la quantité totale des éléments Si, C et O.

4. Filtre selon l'une des revendications précédentes, dans lequel le rapport carbone /oxygène mesuré par XPS à la surface des grains de SiC est supérieur à 4.

5. Filtre selon la revendication précédente, dans laquelle la taille médiane des grains de SiC dans ledit matériau est comprise entre 20 nanomètres et 10 micromètres.

6. Filtre selon l'une des revendications précédentes, dans lequel l'épaisseur de ladite couche séparatrice membranaire est comprise entre 10 et 60 micromètres.

7. Filtre selon l'une des revendications précédentes, dans laquelle la teneur massique en oxygène élémentaire du matériau constituant la couche séparatrice membranaire est inférieure ou égale à 0,4% et de préférence est inférieure à 0,3%.

8. Filtre selon l'une des revendications précédentes dans lequel l'élément support poreux comprend ou est constitué par un matériau choisi parmi le carbure de silicium, SiC, en particulier le SiC fritté en phase liquide ou en phase solide, le SiC recristallisé, le nitrure de Silicium, en particulier $Si_3N_4$, l'oxynitrure de Silicium, en particulier $Si_2ON_2$, l'oxynitrure de Silicium et d'Aluminium, ou une combinaison de ceux-ci.

9. Filtre selon l'une des revendications précédentes dans lequel la porosité ouverte du matériau constituant l'élément support est comprise entre 20 et 60%, le diamètre médian de pores du matériau constituant le support poreux étant de préférence compris entre 5 et 50 micromètres.

10. Filtre selon l'une des revendications précédentes comprenant en outre une ou plusieurs couches primaires disposées entre le matériau constituant l'élément support et le matériau constituant la couche séparatrice membranaire.

11. Procédé de fabrication d'une couche séparatrice membranaire, dans un filtre tangentiel ou frontal selon l'une des revendications 1 à 10, de préférence tangentiel, comprenant les étapes suivantes :

   - préparation d'une barbotine à partir d'une poudre de particules de carbure de silicium de taille moyenne comprise entre 20 nanomètres et 10 micromètres,

- application de ladite barbotine sur l'élément support, dans des conditions permettant la formation d'une couche mince de la barbotine sur la partie interne des canaux dudit filtre,
- séchage, puis cuisson sous une atmosphère d'un gaz neutre à une température comprise entre 1400°C et 2000°C et pendant un temps suffisant pour l'obtention d'une couche séparatrice membranaire sur leur surface interne desdits canaux constituée essentiellement de grains de carbure de silicium frittés,
- traitement d'élimination d'une partie de l'oxygène résiduel élémentaire présent à la surface desdits grains par l'action d'acide fluorhydrique.

12. Utilisation d'un filtre selon l'une des revendications 1 à 10 pour la filtration de liquides, en particulier d'un liquide aqueux.


**Patentansprüche**

1. Filter für die Filtration einer Flüssigkeit, umfassend ein Trägerelement (1) oder aus diesem bestehend, das aus einem porösen Keramikmaterial gefertigt ist, wobei das Element eine röhrenförmige oder quaderförmige Form aufweist, die durch eine äußere Oberfläche (2) begrenzt ist, und umfassend in seinem inneren Abschnitt (3) eine Anordnung von angrenzenden Kanälen (4) mit zueinander parallelen Achsen und die durch die Wände (8) des anorganischen porösen Materials voneinander getrennt sind, wobei:

   - mindestens ein Teil der Kanäle (4) auf ihren inneren Oberflächen von einer porösen membranartigen Trennschicht (5) bedeckt wird und/oder
   - mindestens ein Teil der äußeren Oberfläche (2) von einer porösen membranartigen Trennschicht (5) bedeckt wird;

   wobei der Filter **dadurch gekennzeichnet ist, dass:**

   - die Schicht aus einem Material gefertigt ist, das im Wesentlichen aus gesinterten Körnern von Siliciumcarbid (SiC) besteht, wobei das SiC mehr als 97 % der Masse des Materials darstellt, aus dem diese Schicht besteht,
   - der Massengehalt an elementarem Sauerstoff der membranartigen Trennschicht, bestimmt mittels Schmelzen unter Inertgas, weniger als 0,5 % beträgt,
   - die Porosität und der mittlere Durchmesser von Poren der membranartigen Trennschicht, die durch eine Analyse von einem mit einem Rasterelektronenmikroskop aufgenommenen Bild bestimmt wird, zwischen 30 und 70 % beziehungsweise zwischen 10 Nanometern und 5 Mikrometern beträgt.

2. Filter nach dem vorstehenden Anspruch, wobei das SiC mehr als 99 % der Masse des Materials darstellt, aus dem die membranartige Trennschicht besteht.

3. Filter nach einem der vorstehenden Ansprüche, wobei die mittels XPS gemessene atomare Sauerstoffkonzentration auf der Oberfläche der SiC-Körner weniger als 10 % beträgt, basierend auf der Gesamtmenge der Elemente Si, C und O.

4. Filter nach einem der vorstehenden Ansprüche, wobei das mittels XPS gemessene Kohlenstoff/Sauerstoff-Verhältnis auf der Oberfläche der SiC-Körner größer als 4 ist.

5. Filter nach dem vorstehenden Anspruch, wobei die mittlere Größe der SiC-Körner in dem Material zwischen 20 Nanometer und 10 Mikrometer umfasst.

6. Filter nach einem der vorstehenden Ansprüche, wobei die Dicke der membranartigen Trennschicht zwischen 10 und 60 Mikrometer umfasst.

7. Filter nach einem der vorstehenden Ansprüche, wobei der Massengehalt an elementarem Sauerstoff des Materials, aus dem die membranartige Trennschicht besteht, kleiner als oder gleich 0,4 % ist und vorzugsweise kleiner als 0,3 % ist.

8. Filter nach einem der vorstehenden Ansprüche, wobei das poröse Trägerelement ein Material umfasst oder aus diesem besteht, das aus Siliciumcarbid, SiC, insbesondere dem gesinterten SiC in flüssiger Phase oder in fester Phase, dem umkristallisierten SiC, dem Siliciumnitrid, insbesondere $Si_3N_4$, dem Siliciumoxynitrid, insbesondere

$Si_2ON_2$, dem Aluminium- und Siliciumoxynitrid oder einer Kombination aus diesen ausgewählt ist.

9. Filter nach einem der vorstehenden Ansprüche, wobei die zusammenhängende Porosität des Materials, aus dem das Trägerelement besteht, zwischen 20 und 60 % umfasst, der mittlere Durchmesser der Poren des Materials, aus dem das poröse Trägerelement besteht, vorzugsweise zwischen 5 und 50 Mikrometer umfasst.

10. Filter nach einem der vorstehenden Ansprüche, ferner umfassend eine oder mehrere primäre Schichten, die zwischen dem Material, aus dem das Trägerelement besteht, und dem Material, aus dem die membranartige Trennschicht besteht, eingerichtet sind.

11. Verfahren zum Herstellen einer membranartigen Trennschicht in einem Querstrom- oder einem Frontalfilter nach einem der Ansprüche 1 bis 10, vorzugsweise einem Querstromfilter, umfassend die folgenden Schritte:

- Erzeugen einer Tonschlämme aus einem Pulver von Siliciumcarbidpartikeln, deren Durchschnittsgröße zwischen 20 Nanometer und 10 Mikrometer umfasst,
- Aufbringen der Tonschlämme auf das Trägerelement, bei Bedingungen, die die Ausbildung einer dünnen Schicht der Tonschlämme auf den inneren Teil der Kanäle des Filters ermöglichen,
- Trocknen, dann Brennen in einer Atmosphäre eines neutralen Gases bei einer Temperatur zwischen 1400 °C und 2000 °C und über eine Zeit, die ausreicht, um eine membranartige Trennschicht auf der inneren Oberfläche der Kanäle zu erhalten, wobei die Kanäle im Wesentlichen aus gesinterten Siliciumcarbidkörnern bestehen,
- Behandeln zum Entfernen eines Teils des restlichen elementaren Sauerstoffs, der auf der Oberfläche der Körner vorhanden ist, durch das Einwirken von Fluorwasserstoffsäure.

12. Verwendung eines Filters nach einem der Ansprüche 1 bis 10 für die Filtration von Flüssigkeiten, insbesondere einer wässrigen Flüssigkeit.

**Claims**

1. Filter for the filtration of a liquid, comprising or composed of a support element (1) made of a porous ceramic material, said element having a tubular or parallelepiped shape defined by an external surface (2) and comprising, in its internal portion (3), a set of adjacent channels (4) having axes parallel to one another and separated from one another by walls (8) of said porous inorganic material, wherein:

- at least some of said channels (4) are covered on their internal surface with a porous separating membrane layer (5) and/or
- at least a portion of said outer surface (2) is covered with a porous separating membrane layer (5);

said filter being **characterized in that:**

- said layer is made of a material essentially composed of sintered grains of silicon carbide (SiC), the SiC representing more than 97% of the weight of the material constituting said layer,
- the weight content of elemental oxygen of the separating membrane layer, determined by inert gas fusion, is less than 0.5%,
- the porosity and the median pore diameter of the separating membrane layer, measured by analyzing negatives obtained by scanning electron microscope, are respectively between 30 and 70% and between 10 nanometers and 5 micrometers.

2. Filter according to the preceding claim, wherein the SiC represents more than 99% of the weight of the material constituting the separating membrane layer.

3. Filter according to either of the preceding claims, wherein the atomic concentration of oxygen measured by XPS at the surface of the SiC grains is less than 10%, on the basis of the total amount of the Si, C and O elements.

4. Filter according to any of the preceding claims, wherein the carbon/oxygen ratio measured by XPS at the surface of the SiC grains is greater than 4.

5. Filter according to the preceding claim, wherein the median size of the SiC grains in said material is between 20 nanometers and 10 micrometers.

6. Filter according to any of the preceding claims, wherein the thickness of said separating membrane layer is between 10 and 60 micrometers.

7. Filter according to any of the preceding claims, wherein the weight content of elemental oxygen of the material constituting the separating membrane layer is less than or equal to 0.4% and preferably is less than 0.3%.

8. Filter according to any of the preceding claims, wherein the porous support element comprises or is composed of a material chosen from silicon carbide, SiC, in particular liquid-phase or solid-phase sintered SiC, recrystallized SiC, silicon nitride, in particular $Si_3N_4$, silicon oxynitride, in particular $Si_2ON_2$, silicon aluminum oxynitride, or a combination thereof.

9. Filter according to any of the preceding claims, wherein the open porosity of the material constituting the support element is between 20% and 60%, the median pore diameter of the material constituting the porous support preferably being between 5 and 50 micrometers.

10. Filter according to any of the preceding claims, further comprising one or more primer layers arranged between the material constituting the support element and the material constituting the separating membrane layer.

11. Method for producing a separating membrane layer, in a tangential or frontal filter, according to any of claims 1 to 10, preferably a tangential filter, comprising the following steps:

   - preparation of a slip from a powder of silicon carbide particles having a mean size of between 20 nanometers and 10 micrometers,
   - application of said slip to the support element, under conditions that allow a thin layer of the slip to form on the internal portion of the channels of said filter,
   - drying and then firing under an inert gas atmosphere at a temperature of between 1400°C and 2000°C and for a time sufficient to obtain a separating membrane layer on their internal surface of said channels essentially composed of sintered silicon carbide grains,
   - treatment for removing some of the residual elemental oxygen present at the surface of said grains by the action of hydrofluoric acid.

12. Use of a filter according to any of claims 1 to 10 for the filtration of liquids, in particular of an aqueous liquid.

A

P

1

1

4

8

4

3

5

2

FIG. 1

FIG. 2

**RÉFÉRENCES CITÉES DANS LA DESCRIPTION**

**Documents brevets cités dans la description**

- FR 2549736
- EP 0219383 A1
- WO 03024892 A
- US 7699903 B2
- EP 2511250 A
- EP 2484433 A